# EUROPEAN PATENT APPLICATION

(11) **EP 2 921 792 A1**
(43) Date of publication of application: **23.09.2015**
(21) Application number: 15158517.1
(22) Date of filing: 10.03.2015
(51) Int. Cl.: F24F 1/02, F24F 1/34, F24F 1/26, F16L 5/10

(54) **INTEGRATED TYPE AIR CONDITIONER WITH PIPING MEMBER SUPPORT STRUCTURE**

(30) Priority: 19.03.2014 JP 2014056553
(71) Applicant: MITSUBISHI HEAVY INDUSTRIES, LTD., Tokyo 108-8215 (JP)
(72) Inventor: Okada, Yuji, Tokyo, 108-8215 (JP); Nunome, Yoshinori, Tokyo, 108-8215 (JP)
(74) Representative: Intès, Didier Gérard André

(57) **Abstract**

A piping member support structure S includes a cutout portion 31 formed in a partition member 3, and an elastic vibration-proof holding member 32 closely fitted in the cutout portion, and holding piping members 26, 27 in a vibration isolating manner, in the portion where the piping members penetrate the partition member. The vibration-proof holding member includes piping insertion holes 38, 39 where the piping members are closely inserted, and cut-through portions 41, 42 extending to a fitting direction F of the vibration-proof holding member from the holes. Spacing dimensions w1, w2 between two facing surfaces 41a, 42a of the cut-through portions are smaller than inside diameter dimensions d1, d2 of the piping insertion holes, and are such sizes that the piping member can be fitted into the piping insertion hole by forcefully opening the spacing within an elasticity range of the vibration-proof holding member.

## Description

### {Technical Field}

The present invention relates to a piping member support structure for an indoor and outdoor integrated type air conditioner in which an indoor unit and an outdoor unit are integrated, and an indoor and outdoor air conditioner including the piping member support structure.

### {Background Art}

Patent Literature 1 shows an indoor and outdoor integrated type air conditioner in which an indoor unit and an outdoor unit are integrated adjacently to each other in the horizontal direction. An indoor and outdoor integrated type air conditioner like this has a structure in which the indoor unit and the outdoor unit are partitioned by a partition plate, and refrigerant piping connecting the indoor unit and the outdoor unit penetrates through the partition plate.

Fig. 2 of Patent Literature 1 illustrates a piping member support structure in which putty (a sealant or the like) is filled in a cutout portion as the prior art, in order to prevent wind and rain from outside entering an indoor unit side from the cutout portion in the partition plate.

However, a piping member support structure in which putty is filled in the cutout portion where refrigerant piping passes as above not only requires a lot of effort in assembly thereof, but also causes a fear of reduction in sealability, because the filled state of the putty varies depending on the level of the skill of a worker who fills the putty.

Therefore, Fig. 3 and Fig. 4 in Patent Literature 1 illustrate the structure in which at an edge portion of an indoor cover which is fitted from above the partition plate, a hood-shaped protruded portion which is bulged to cover an upper part of the cutout portion, and a folded portion that is folded downward from the protruded portion are provided so that water droplets at a time of rainfall are prevented from entering from the cutout portion, as an improvement.

### {Citation List}

### {Patent Literature}

### {PTL 1}

Japanese Examined Utility Model Application, Publication No. Sho 62-27784

### {Summary of Invention}

### {Technical Problem}

However, in the structure in Figs. 3 and 4 of Patent Literature 1, the refrigerant piping is only inserted through the cutout portion of the partition plate, and putty, a vibration isolator and the like are not used. Therefore, vibration of the compressor which is incorporated in the outdoor unit is transmitted to the indoor unit side through the refrigerant piping, and there arises the fear of generating vibration sound, and reducing durability of the evaporator which is incorporated in the indoor unit side due to the influence of the vibration.

Further, for example, at a time of a cooling operation, the condenser that condenses the refrigerant is cooled by a cooling fan inside the outdoor unit, and there is the trouble that hot air that finishes cooling the condenser blows to the indoor unit side through the cutout portion through which the aforementioned refrigerant piping is inserted, and reduces the cooling efficiency of the evaporator installed inside the indoor unit.

The present invention is made in the light of the above described circumstances, and has an object to provide a piping member support structure for an indoor and an outdoor integrated type air conditioner capable of improving assembly workability and sealability in a penetrated portion for the piping member to a partition member, and preventing vibration of the piping member, outward leakage of condensed water and the like, in an indoor and outdoor integrated air conditioner with a structure in which the piping member is penetrated through the partition member which partitions an outdoor unit and an indoor unit which are vertically integrated, and an indoor and outdoor integrated air conditioner including the piping member support structure.

### {Solution to Problem}

In order to solve the above described problem, the present invention adopts the following solution.

A piping member support structure for an indoor and outdoor integrated type air conditioner according to the present invention is a piping member support structure for an indoor and outdoor integrated type air conditioner including an outdoor unit and an indoor unit that are vertically integrated, a partition member that separates the outdoor unit and the indoor unit, and a piping member that connects the outdoor unit and the indoor unit, and penetrates through the partition member, the piping member support structure including a cutout portion in a shape curved inward that is formed at an edge portion of the partition member, and a vibration-proof holding member that is formed of an elastic material and is closely fitted in the cutout portion so as to hold the piping member in a vibration isolating manner, wherein the vibration-proof holding member includes a piping insertion hole through which the piping member is closely inserted, and a cut-through portion that extends to a fitting direction of the vibration-proof holding member from the piping insertion hole, and has two surfaces facing each other, and a spacing dimension between the two surfaces of the cut-through portion is smaller than an inside diameter dimension of the piping insertion hole, and is such a size that the piping member can be fitted into the piping insertion hole by forcefully opening the spacing within an elasticity range of the vibration-proof holding member.

According to the piping member support structure of the above described construction, the vibration-proof holding member which is formed of an elastic material is closely fitted into the cutout portion in the concave shape which is formed at the edge portion of the partition member which separates the outdoor unit and the indoor unit, and the piping member is held by the vibration-proof holding member in a vibration isolating manner. Therefore, vibration of the compressor which is incorporated in the outdoor unit is prevented from being transmitted to the indoor unit side through the metallic piping member, and the fear of generation of vibration sound, and reduction in durability of the evaporator which is incorporated in the indoor unit side can be eliminated.

The piping insertion hole which is formed in the vibration-proof holding member communicates with the back surface side of the vibration-proof holding member via the cut-through portion extending to the fitting direction of the vibration-proof holding member. Therefore, even if placement of the piping member passing through the cutout portion is completed, the vibration-proof holding member is easily fitted onto the piping member later, and can be fitted in the cutout portion. Accordingly, workability at the time of assembling the vibration-proof holding member is extremely high.

The spacing dimension between the two surfaces of the cut-through portion is such a dimension that the piping member can be fitted into the piping insertion hole if the spacing is forcefully opened within the elasticity range of the vibration-proof holding member, and is set to be the dimension smaller than the inside diameter dimension of the piping insertion hole. Therefore, the piping member which is fitted in the piping insertion hole is not disengaged to the cut-through portion side by vibration or the like, and vibration in the horizontal direction (longitudinal and lateral directions) of the piping member is effectively isolated by elasticity of the vibration-proof holding member.

Further, in the above described construction, the piping member support structure for an indoor and outdoor integrated type air conditioner according to the present invention may have a construction wherein an uppermost portion of the cut-through portion in the vibration-proof holding member is a slit portion in which the spacing between the two surfaces is zero, and a wall thickness of the slit portion is set at such a thickness as not to interfere with fitting of the piping member into the piping insertion hole.

According to the piping member support structure of the above described construction, the upper portion of the cut-through portion is closed by the slit portion, and therefore, when the condensed water formed on the surface of the piping member flows down onto the top surface of the vibration-proof holding member, the condensed water can be prevented from flowing down from the cut-through portion with vigor. The condensed water leaks downward from the slit portion, and flows downward along the piping member. Therefore, the condensed water is reliably guided to a predetermined position (a drain pan or the like) and can be properly disposed of.

Further, the upper portion of the cut-through portion is closed by the slit portion, and therefore, flow of air to and from the outdoor unit and the indoor unit can be inhibited. Therefore, for example, hot air generated inside the outdoor unit at the time of a cooling operation can be prevented from flowing in an inside of the indoor unit and reducing the cooling efficiency (heat loss).

Further, in the above described construction, the piping member support structure for an indoor and outdoor integrated type air conditioner according to the present invention may have a construction wherein on a top surface of the vibration-proof holding member, a waterstop wall that surrounds and is spaced from a periphery of the piping insertion hole is vertically provided.

Thereby, when the condensed water formed on the surface of the piping member flows down onto the top surface of the vibration-proof holding member, the condensed water is blocked by the waterstop wall, and is prevented from flowing. Therefore, the condensed water is passed in an optional direction and can be properly disposed of.

Further, in the above described construction, the piping member support structure for an indoor and outdoor integrated type air conditioner according to the present invention may have a construction wherein on an outer peripheral surface of the vibration-proof holding member, an outer peripheral fitting groove that is fitted onto an inner peripheral edge portion of the cutout portion is formed, at both end portions of the inner peripheral edge portion, engagement hooks that extend toward an inside of the shape curved inward of the cutout portion are formed, and at both end portions of the outer peripheral fitting groove, engagement concave portions with which the engagement hooks are engaged are formed.

According to the above described construction, if the vibration-proof holding member is forced into the cutout portion so that the inner peripheral edge portion of the cutout portion is fitted in the outer peripheral fitting groove of the vibration-proof holding member, the engagement hooks at the inner peripheral edge portion finally engages with the engagement concave portions in the outer peripheral fitting groove, whereby the vibration-proof holding member is positioned to and fitted in the cutout portion. By engagement of the engagement hooks and the engagement concave portions, the vibration-proof holding member does not disengage from the cutout portion naturally. Accordingly, assembly workability of the vibration-proof holding member is improved, and a holding force of the vibration-proof holding member in the cutout portion can be enhanced.

Further, in the above described construction, the piping member support structure for an indoor and outdoor integrated type air conditioner according to the present invention may have a construction wherein a vertical wall portion along the outer peripheral surface of the vibration-proof holding member is formed in the cutout portion.

According to the above described construction, the vertical wall portion provided in the cutout portion is in contact with the outer peripheral surface of the vibration-proof holding member in a planar form, and therefore, vibration of the piping member is stably received by the cutout portion in a wide area through the vibration-proof holding member and the vertical wall portion. Therefore, vibration of the piping member can be isolated more effectively.

Further, an indoor and outdoor integrated type air conditioner according to the present invention includes an outdoor unit and an indoor unit that are vertically integrated, a partition member that separates the outdoor unit and the indoor unit, and any one of the above described piping member support structures.

According to the indoor and outdoor integrated type air conditioner, the vibration-proof holding member which is an elastic body is closely fitted in the cutout portion formed at the edge portion of the partition member, and the piping member is held by the vibration-proof holding member in a vibration isolating manner. Therefore, vibration of the compressor which is incorporated in the outdoor unit is difficult to transmit to the indoor unit side through the piping member, and generation of vibration sound and reduction in durability of the evaporator can be restrained.

Further, the piping insertion hole which is formed in the vibration-proof holding member communicates with the back surface side of the vibration-proof holding member through the cut-through portion which extends to the fitting direction of the vibration-proof holding member. Therefore, the vibration-proof holding member can be fitted after the piping member is placed, and assembly workability of the vibration-proof holding member can be made excellent.

### {Advantageous Effects of Invention}

As above, according to the piping member support structure for an indoor and outdoor integrated type air conditioner according to the present invention, and the indoor and outdoor integrated type air conditioner including the piping member support structure, assembly workability and sealability in the insertion portion of the piping member can be improved, and vibration of the piping member, outward leakage of condensed water and the like can be prevented.

### {Brief Description of Drawings}

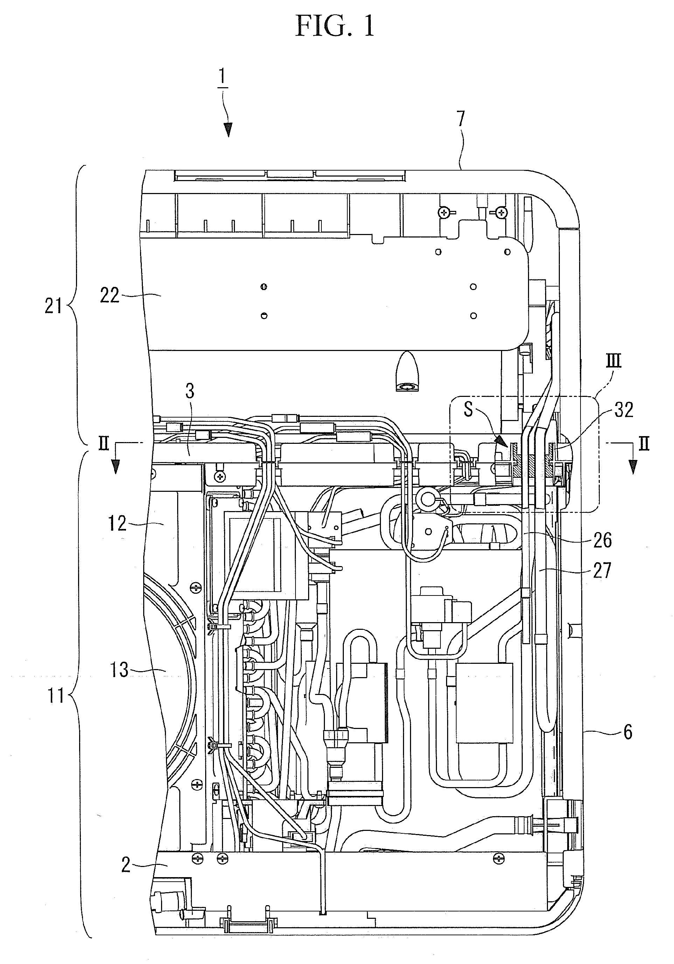

{Fig. 1}
   Fig. 1 is a rear view of an indoor and outdoor integrated type air conditioner according to an embodiment of the present invention.
{Fig. 2}
   Fig. 2 is a cross-sectional view of the air conditioner showing one embodiment of the present invention viewed from arrows II-II in Fig. 1.
{Fig. 3}
   Fig. 3 is an enlarged view of part III in Fig. 1.
{Fig. 4}
   Fig. 4 is a plan view of a piping member support structure showing one embodiment of the present invention.
{Fig. 5}
   Fig. 5 is a perspective view of a vibration isolating block.
{Fig. 6}
   Fig. 6 is a top view of the vibration isolating block.
{Fig. 7}
   Fig. 7 is a front view of the vibration isolating block seen from an arrow VII in Fig. 5.
{Fig. 8}
   Fig. 8 is a bottom view of the vibration isolating block.
{Fig. 9}
   Fig. 9 is a longitudinal sectional view of the vibration isolating block and the piping member taken along a line IX-IX in Fig. 7.
{Fig. 10}
   Fig. 10 is a rear view of a vibration-proof holding member seen from an arrow X in Fig. 5.

### {Description of Embodiments}

Hereinafter, an embodiment of the present invention will be described with reference to the drawings.

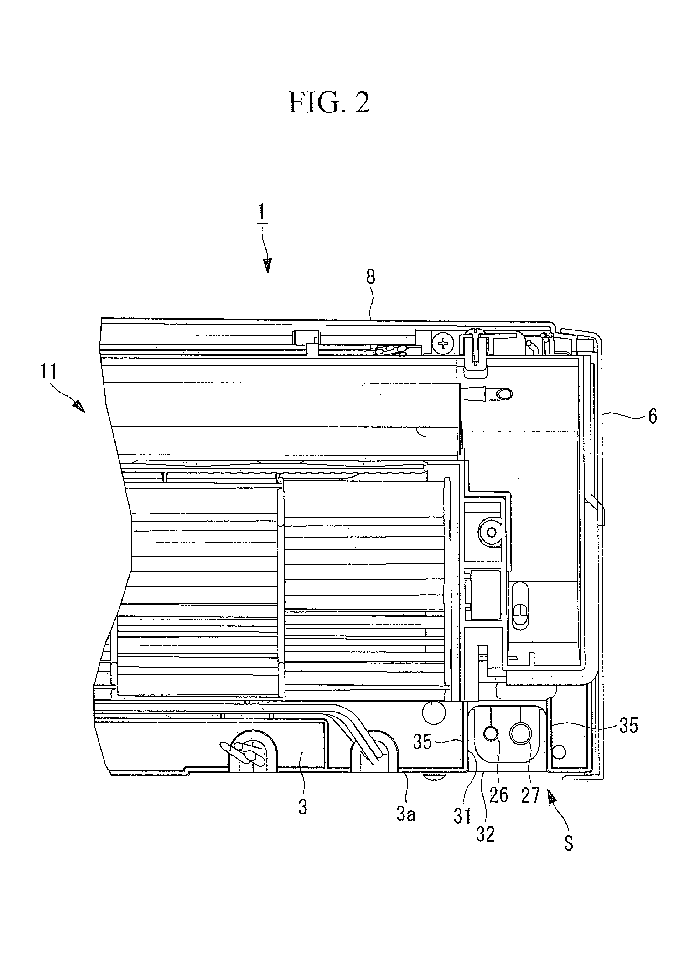

Fig. 1 is a rear view of an indoor and outdoor unit integrated type air conditioner to which the embodiment of the piping member support structure according to the present invention is applied, and Fig. 2 is a cross-sectional view of the air conditioner seen from arrows II-II in Fig. 1.

In the indoor and outdoor integrated type air conditioner 1, a tray-shaped drain pan 2 which is horizontal and rectangular is provided at a lowermost portion thereof, and a similar tray-shaped intermediate frame 3 (a partition member) is also provided in an intermediate portion. The drain pan 2 and the intermediate frame 3 are respectively molded from a resin, for example, and construct an air conditioner frame by being connected to each other by metallic angle members or the like (not illustrated) which are vertically disposed at respective four corners of the drain pan 2 and the intermediate frame 3. The air conditioner frame is enclosed by an exterior plate 6, a ceiling plate 7, a front plate 8, a back plate (not illustrated), and the like.

An outdoor unit 11 is installed on the drain pan 2. Reference sign 12 shown in Fig. 1 designates a condenser, and reference sign 13 designates a cooling fan. The outdoor unit 11 is constructed by including a compression machine (compressor), a control device and the like (not illustrated), in addition to the above components.

An indoor unit 21 is installed on the intermediate frame 3. The indoor unit 21 is constructed by having a vaporizer (an evaporator), a blower (a sirocco fan) and the like which are not illustrated incorporated inside a resin unit box 22.

As above, the outdoor unit 11 and the indoor unit 21 are vertically integrated, and are separated by the intermediate frame 3. Two metallic piping members 26 and 27 that connect the outdoor unit 11 and the indoor unit 21 penetrate through the intermediate frame 3, and a piping member support structure S according to the present invention is applied to a penetration portion. The piping members 26 and 27 are respectively a high-pressure refrigerant hose, and a low-pressure refrigerant hose, for example, but any other kinds of piping may be used.

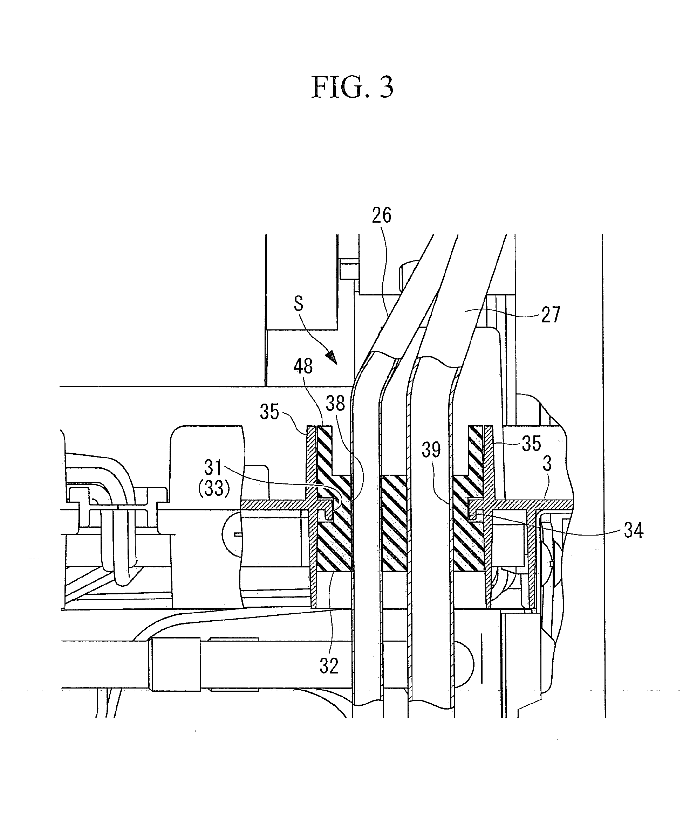

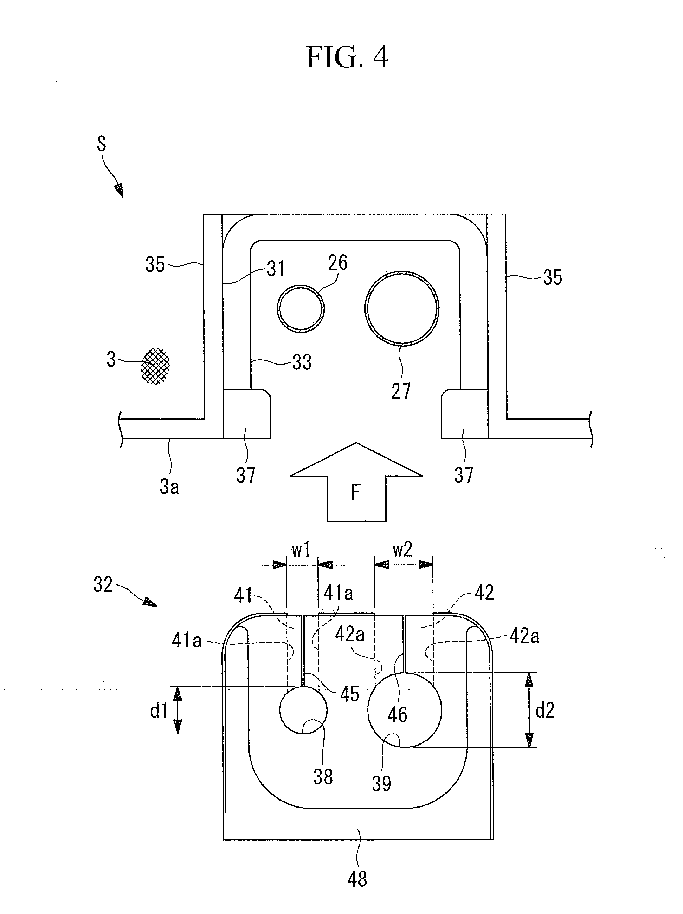

Fig. 3 is an enlarged view showing the piping member support structure S by enlarging a part III in Fig. 1, and Fig. 4 is a plan view of the piping member support structure S.

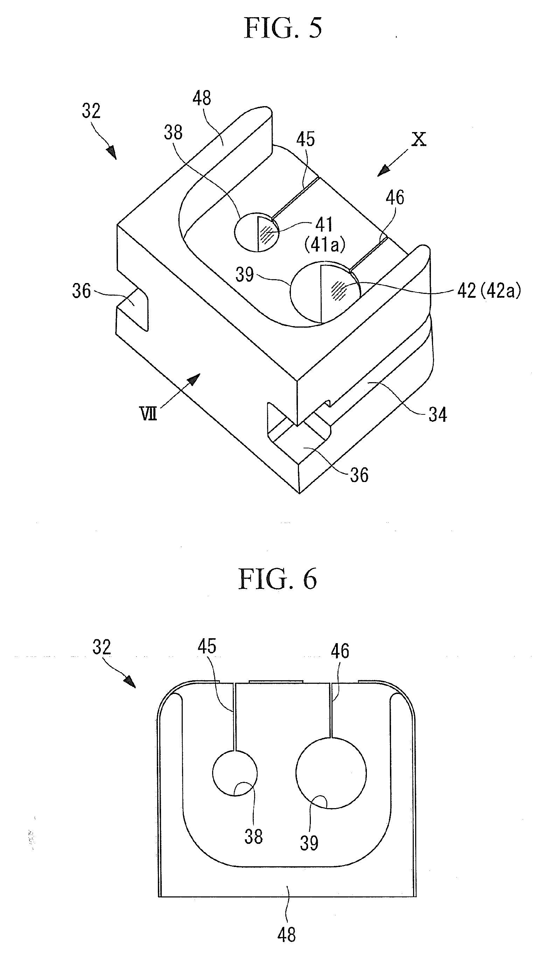

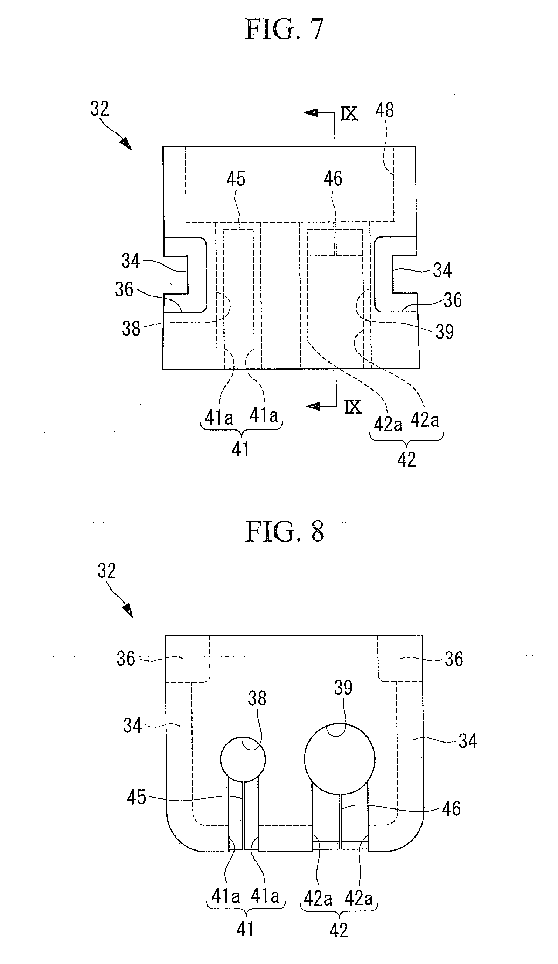

As shown in Figs. 2 to 4, the piping member support structure S has a construction including a cutout portion 31 which is formed at an edge portion of the intermediate frame 3 and has a shape curved inward in plan view, and a vibration isolating block 32 (a vibration-proof holding member) that is closely fitted in the cutout portion 31. Figs. 5 to 10 are single component views of the vibration isolating block 32. The vibration isolating block 32 is formed of an elastic material such as a rubber, a flexible resin, a silicon resin, and an expandable resin, and is a component that is closely fitted into the cutout portion 31 and has a role of holding the piping members 26 and 27 in a vibration isolating manner.

In plan view (see Figs. 2 and 4), the cutout portion 31 presents a shape in which an edge portion of the intermediate frame 3 is cut out into a substantially rectangular shape to curve inward to an inside region of the intermediate frame 3, and as shown in Figs. 3 and 4, an inner peripheral edge portion 33 of the cutout portion 31 is in a flange shape so that the inner peripheral edge portion 33 is fitted in an outer peripheral fitting groove 34 formed on an outer peripheral surface of the vibration isolating block 32. The outer peripheral fitting groove 34 is formed throughout three surfaces that are both left and right side surfaces and a rear surface of the vibration isolating block 32.

Further, vertical wall portions 35 which stand upright and are formed at both side portions of the cutout portion 31. The vertical wall portion 35 continues to an outer peripheral wall 3a (see Figs. 2 and 4) of the intermediate frame 3 which is formed into a tray-shape, and is a wall along an outer peripheral surface of the vibration isolating block 32 which is fitted into the cutout portion 31. Note that in the present embodiment, the vertical wall portions 35 are formed on only two sides that face each other of the cutout portion 31, but may be formed throughout an entire perimeter of the inward-curving shape of the cutout portion 31.

As shown in Fig. 4, a pair of engagement hooks 37 are formed at both end portions (a forefront portion) of the inner peripheral edge portion 33 in the cutout portion 31. The pair of engagement hooks 37 extend toward an inside of the inward-curving shape of the cutout portion 31 to be close to each other. In the engagement hook 37, thickness dimensions in the horizontal direction and the vertical direction are set to be larger than thickness dimensions in the horizontal and the vertical direction of the inner peripheral edge portion 33.

As shown in Figs. 5, 7, 8 and the like, in the outer peripheral fitting groove 34 which is formed in the outer peripheral surface of the vibration isolating block 32 and is fitted onto the inner peripheral edge portion 33 of the cutout portion 31, engagement concave portions 36 with which the aforementioned engagement hooks 37 are engaged are formed at both end portions thereof. Depth dimensions in the horizontal and vertical directions are larger than depth dimensions in the horizontal and vertical directions of the outer peripheral fitting groove 34.

Further, in the vibration isolating block 32, two vertical piping insertion holes 38 and 39 through which the piping members 26 and 27 are closely inserted, and cut-through portions 41 and 42 (see Figs. 4, 5 and 8) that extend from the piping insertion holes 38 and 39 toward a fitting direction F (see Fig. 4) of the vibration isolating block 32 respectively to pass through the vibration isolating block 32 to the back surface side of the vibration isolating block 32 are formed.

The cut-through portions 41 and 42 respectively have two parallel surfaces 41a and 41a, and 42a and 42a which face each other. As shown in Fig. 4, a spacing dimension w1 between the two surfaces 41a and 41a, and a spacing dimension w2 between the two surfaces 42a and 42a are set to be smaller than inside diameter dimensions d1 and d2 of the piping insertion holes 38 and 39 respectively and to be spaces which allow the piping members 26 and 27 to be fitted into the piping insertion holes 38 and 39 by forcefully opening the cut-through portions 41 and 42 within an elasticity range of the vibration isolating block 32.

For example, when the inside diameter dimensions d1 and d2 of the piping insertion holes 38 and 39 are 6 mm and 9.5 mm, respectively, the spacing dimensions w1 and w2 of the two surfaces 41a and 42a are set at approximately 4 mm and 7.5 mm, respectively.

Furthermore, as shown in Fig. 4, uppermost portions of the cut-through portions 41 and 42 in the vibration isolating block 32 are slit portions 45 and 46 in which the spaces between the two surfaces 41a and 41a, and 42a and 42a are zero, and in plan view of the vibration isolating block 32, the cut-through portions 41 and 42 are invisible. That is to say, in plan view of the vibration isolating block 32, only the piping insertion holes 38 and 39 and the slit portions 45 and 46 which extends from the piping insertion holes 38 and 39 are visible.

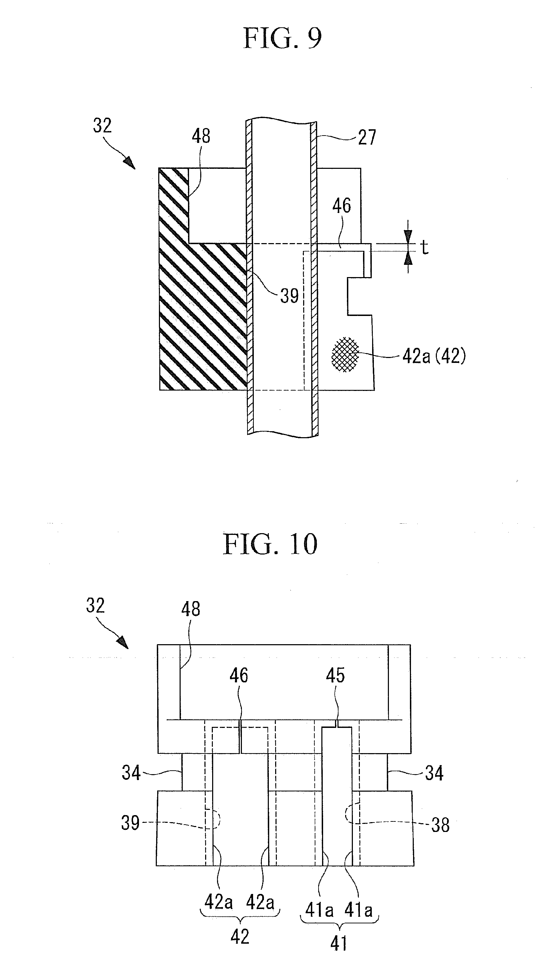

A wall thickness t (see Fig. 9) at portions where the slit portions 45 and 46 are provided is set at such a thickness as not to interfere with fitting of the piping members 26 and 27 into the piping insertion holes 38 and 39, that is, a thickness of approximately 1 to 2 mm, for example, with which the piping members 26 and 27 can turn up the portions where the slit portions 45 and 46 are provided when passing through the cut-through portions 41 and 42.

Further, a waterstop wall 48 that surrounds and is spaced from peripheries of the piping insertion holes 38 and 39 is vertically provided on a top surface of the vibration isolating block 32. The waterstop wall 48 is raised from a front edge portion and both side edge portions of the top surface of the vibration isolating block 32, and presents a channel shape in plan view. Note that the waterstop wall 48 may be also formed at a rear edge portion of the vibration isolating block 32.

A height of the waterstop wall 48 is set at such an extent as to be able to collect condensed water when the condensed water formed on surfaces of the piping members 26 and 27 which are at a position higher than the vibration isolating block 32 flows downward, that is, at several millimeters to around 1 to 2 centimeters.

The piping member support structure S is constructed as above.

At a time of assembly of the indoor and outdoor integrated type air conditioner 1, the outdoor unit 11 and the indoor unit 21 are respectively assembled onto the drain pan 2 and the intermediate frame 3. After both the units 11 and 21 are connected by the piping members 26 and 27, the vibration isolating block 32 is fitted into the cutout portion 31 of the intermediate frame 3 as shown in Fig. 4 to prevent vibration of the piping members 26 and 27.

At a time of fitting the vibration isolating block 32, the vibration isolating block 32 is pressed in the fitting direction F so that the inner peripheral edge portion 33 of the cutout portion 31 is inserted in the outer peripheral fitting groove 34 of the vibration isolating block 32 (see Fig. 4). The cut-through portions 41 and 42 of the vibration isolating block 32 are applied to the piping members 26 and 27, respectively, and are further pressed in the fitting direction F, whereby the piping members 26 and 27 pass through the cut-through portions 41 and 42 and are fitted into the piping insertion holes 38 and 39. Simultaneously therewith, the engagement hooks 37 of the cutout portion 31 engage with the engagement concave portions 36 of the outer peripheral fitting groove 34. Therefore, the vibration isolating block 32 is difficult to disengage from the cutout portion 31.

The piping members 26 and 27 are held by the piping insertion holes 38 and 39 of the vibration isolating block 32 which is closely fitted in the cutout portion 31 in a vibration isolating manner. Therefore, vibration of the compressor which is incorporated in the outdoor unit 11 is prevented from being transmitted to the indoor unit 21 side through the metallic piping members 26 and 27, and the fears of generation of vibration sound, and reduction in durability of the evaporator (not illustrated) which is incorporated in the indoor unit 21 side can be eliminated.

The piping insertion holes 38 and 39 which are formed in the vibration isolating block 32 communicates with the back surface side of the vibration isolating block 32 via the cut-through portions 41 and 42 which extend toward the fitting direction F of the vibration isolating block 32. Therefore, even if placement of the piping members 26 and 27 which passes through the cutout portion 31 is completed, the vibration isolating block 32 is easily fitted to the piping members 26 and 27 later, and can be fitted into the cutout portion 31. Accordingly, workability at the time of assembling the vibration isolating block 32 is extremely good.

The spacing dimensions w1 and w2 of the two surfaces 41a and 42a of the cut-through portions 41 and 42 are set at such dimensions that the piping members 26 and 27 can be fitted into the piping insertion holes 38 and 39 if the cut-through portions 41 and 42 are forcefully opened within the elasticity range of the vibration isolating block 32. However, the spacing dimensions w1 and w2 are set at dimensions smaller than the inside diameter dimensions of the piping insertion holes 38 and 39, and therefore, the piping members 26 and 27 which are fitted in the piping insertion holes 38 and 39 are not disengaged to the cut-through portions 41 and 42 sides by vibration or the like. Accordingly, the vibration in the horizontal direction (the longitudinal and lateral directions) of the piping members 26 and 27 can be effectively isolated by the elasticity of the vibration isolating block 32.

Further, the uppermost portions of the cut-through portions 41 and 42 in the vibration isolating block 32 are the slit portions 45 and 46 where the spaces between the facing two surfaces 41a and 42a are zero. The wall thickness t (see Fig. 9) of the slit portions 45 and 46 is set at such a thickness as not to interfere the piping members 26 and 27 being fitted into the piping insertion holes 38 and 39. The upper portions of the cut-through portions 41 and 42 are closed by the slit portions 45 and 46.

Accordingly, when the condensed water formed on the surfaces of the piping members 26 and 27 flow down onto the top surface of the vibration isolating block 32, the condensed water is prevented from flowing downward with vigor from the cut-through portions 41 and 42. The condensed water leaks downward little by little from the slit portions 45 and 46, and flows downward along the piping members 26 and 27. Therefore, the condensed water is reliably guided to a predetermined position (the drain pan 2 and the like) and can be properly disposed of.

Further, the upper portions of the cut-through portions 41 and 42 are closed by the slit portions 45 and 46, and therefore, air can be inhibited from flowing to and from the outdoor unit 11 and the indoor unit 21. Therefore, hot air which is generated inside the outdoor unit 11 at the time of a cooling operation can be effectively prevented from flowing into the indoor unit 21 and reducing cooling efficiency (heat loss).

Further, on the top surface of the vibration isolating block 32, the waterstop wall 48 which surrounds and is spaced from the peripheries of the piping insertion holes 38 and 39 is vertically provided. Therefore, when the condensed water formed on the surfaces of the piping members 26 and 27 flows down onto the top surface of the vibration isolating block 32, the condensed water is blocked by the waterstop wall 48, and is prevented from flowing. Therefore, the condensed water is passed in an optional direction and can be properly disposed of.

Furthermore, on the outer peripheral surface of the vibration isolating block 32, the outer peripheral fitting groove 34 which is fitted onto the inner peripheral edge portion 33 of the cutout portion 31 is formed. At both the end portions of the inner peripheral edge portion 33, the engagement hooks 37 extending toward the inside in the shape curved inward of the cutout portion 31 are formed. At both the end portions of the outer peripheral fitting groove 34, the engagement concave portions 36 with which the engagement hooks 37 are engaged are formed.

Therefore, if the vibration isolating block 32 is forced into the cutout portion 31 so that the inner peripheral edge portion 33 of the cutout portion 31 is fitted in the outer peripheral fitting groove 34 of the vibration isolating block 32, the engagement hooks 37 at the inner peripheral edge portion 33 finally engages with the engagement concave portions 36 of the outer peripheral fitting groove 34, whereby the vibration isolating block 32 is positioned to and fitted in the cutout portion 31. By engagement of the engagement hooks 37 and the engagement concave portions 36, the vibration isolating block 32 does not naturally disengage from the cutout portion 31. Accordingly, assembling workability of the vibration isolating block 32 is improved, and the holding force of the vibration isolating block 32 in the cutout portion 31 can be remarkably enhanced.

Further, in the cutout portion 31, the vertical wall portions 35 are formed, and the vertical wall portions 35 are in contact with the outer peripheral surface of the vibration isolating block 32 in a planar form. Therefore, vibration of the piping members 26 and 27 are stably received by the cutout portion 31 in a wide area through the vibration isolating block 32 and the vertical wall portion 35. Therefore, vibration of the piping members 26 and 27 can be more effectively controlled.

According to the indoor and outdoor integrated type air conditioner 1 including the piping member support structure S as above, the vibration isolating block 32 which is an elastic body is closely fitted in the cutout portion 31 which is formed at the edge portion of the intermediate frame 3 which is the partition member, and the piping members 26 and 27 are held by the vibration isolating block 32 in a vibration isolating manner. Therefore, vibration of the compressor which is incorporated in the outdoor unit 11 is difficult to transmit to the indoor unit 21 side through the piping members 26 and 27, and generation of vibration sound and reduction in durability of the evaporator can be restrained.

As described above, according to the piping member support structure of the indoor and outdoor integrated type air conditioner according to the present embodiment, and the indoor and outdoor integrated type air conditioner including the piping member support structure, assembly workability and sealability in the penetration portion (the cutout portion 31) for the piping members 26 and 27 to the partition member can be improved, and vibration of the piping members 26 and 27, outward leakage of the condensed water and the like can be prevented in the indoor and outdoor integrated type air conditioner 1 with the structure in which the piping members 26 and 27 are penetrated through the partition member (the intermediate frame 3) which separates the outdoor unit 11 and the indoor unit 21 which are vertically integrated.

Note that the present invention is not limited to only the construction of the above described embodiment. Changes and improvements can be properly added and the application field can be changed, within the range without departing from the scope of the present invention, and embodiments to which changes and improvements are added are also included in the scope of the claims of the present invention.

For example, in the above described embodiment, the example is described, which applies the piping member support structure according to the present invention to the portion where the two piping members 26 and 27 penetrate through the intermediate frame 3 which separates the outdoor unit 11 and the indoor unit 21 which construct the indoor and outdoor integrated type air conditioner 1, but the piping member support structure according to the present invention also can be applied to other places if those places have similar structural parts. As a matter of course, the numbers, use purpose and the like of the piping members 26 and 27 are not limited to those in the above described embodiment.

### {Reference Signs List}

- 1: Indoor and outdoor integrated type air conditioner
- 2: Drain pan
- 3: Intermediate frame (Partition member)
- 11: Outdoor unit
- 21: Indoor unit
- 26, 27: Piping member
- 31: Cutout portion
- 32: Vibration isolating block (Vibration-proof holding member)
- 33: Inner peripheral edge portion of cutout portion
- 34: Vibration isolating block outer peripheral fitting groove
- 35: Vertical wall portion
- 36: Engagement concave portion
- 37: Engagement hook
- 38, 39: Piping insertion hole
- 41, 42: Cut-through portion
- 41a, 42a: two surfaces of cut-through portion
- 45, 46: Slit portion
- 48: Waterstop wall
- F: Fitting direction of vibration isolating block
- S: Piping member support structure
- d1, d2: Inside diameter dimension of piping insertion hole
- t: Wall thickness of slit portion
- w1, w2: Spacing dimension of cut-through portion two surfaces

## Claims

1. A piping member support structure for an indoor and outdoor integrated type air conditioner (1) **characterized in that** it comprises:
an outdoor unit (11) and an indoor unit (21) that are vertically integrated,
a partition member (3) that separates the outdoor unit (11) and the indoor unit (21), and
a piping member (26, 27) that connects the outdoor unit (11) and the indoor unit (21), and penetrates through the partition member (3),
the piping member support structure further comprising:
a cutout portion (31) in a shape curved inward that is formed at an edge portion of the partition member (3); and
a vibration-proof holding member (32) that is formed of an elastic material and is closely fitted in the cutout portion (31) so as to hold the piping member (26, 27) in a vibration isolating manner,
wherein the vibration-proof holding member (32) includes
a piping insertion hole (38, 39) through which the piping member (26, 27) is closely inserted, and
a cut-through portion (41, 42) that extends to a fitting direction of the vibration-proof holding member (32) from the piping insertion hole (38, 39), and has two surfaces facing each other, and
a spacing dimension between the two surfaces of the cut-through portion (41, 42) is smaller than an inside diameter dimension of the piping insertion hole (38, 39), and is such a size that the piping member (26, 27) can be fitted into the piping insertion hole (38, 39) by forcefully opening the spacing within an elasticity range of the vibration-proof holding member (32).

2. The piping member support structure for an indoor and outdoor integrated type air conditioner (1) according to claim 1,
wherein an uppermost portion of the cut-through portion (41, 42) in the vibration-proof holding member (32) is a slit portion (45, 46) in which the spacing between the two surfaces is zero, and a wall thickness of the slit portion (45, 46) is set at such a thickness as not to interfere with fitting of the piping member (26, 27) into the piping insertion hole (38, 39).

3. The piping member support structure for an indoor and outdoor integrated type air conditioner (1) according to claim 1 or claim 2,
wherein on a top surface of the vibration-proof holding member (32), a waterstop wall (48) that surrounds and is spaced from a periphery of the piping insertion hole (38, 39) is vertically provided.

4. The piping member support structure for an indoor and outdoor integrated type air conditioner (1) according to any one of claims 1 to 3,
wherein on an outer peripheral surface of the vibration-proof holding member (32), an outer peripheral fitting groove (34) that is fitted onto an inner peripheral edge portion of the cutout portion (33) is formed,
at both end portions of the inner peripheral edge portion (33), engagement hooks (37) that extend toward an inside of the shape curved inward of the cutout portion (31) are formed, and
at both end portions of the outer peripheral fitting groove (34), engagement concave portions (36) with which the engagement hooks (37) are engaged are formed.

5. The piping member support structure for an indoor and outdoor integrated type air conditioner (1) according to any one of claims 1 to 4,
wherein a vertical wall portion (35) along the outer peripheral surface of the vibration-proof holding member (32) is formed in the cutout portion (31).

6. An indoor and outdoor integrated type air conditioner (1), comprising:
an outdoor unit (11) and an indoor unit (21) that are vertically integrated;
a partition member (3) that separates the outdoor unit (11) and the indoor unit (21); and
the piping member support structure according to any one of claims 1 to 5.
